**Europäisches Patentamt**

**European Patent Office**

**Office européen des brevets**

(19)

(11) Veröffentlichungsnummer : **0 121 661**
**B1**

(12)

# EUROPÄISCHE PATENTSCHRIFT

(45) Veröffentlichungstag der Patentschrift :
16.06.87

(21) Anmeldenummer : 84100864.2

(22) Anmeldetag : 27.01.84

(51) Int. Cl.⁴ : **H 01 S 3/081**, H 01 S 3/10, B 23 K 26/00

(54) **Lasergerät für Materialbearbeitung.**

(30) Priorität : 15.02.83 DE 8304141 U

(43) Veröffentlichungstag der Anmeldung :
17.10.84 Patentblatt 84/42

(45) Bekanntmachung des Hinweises auf die Patenterteilung : 16.06.87 Patentblatt 87/25

(84) Benannte Vertragsstaaten :
AT BE CH DE FR GB IT LI SE

(56) Entgegenhaltungen :
DE-A- 1 914 250
PATENTS ABSTRACTS OF JAPAN, Band 6, Nr. 260(M-180)(1138), 18. Dezember 1982

(73) Patentinhaber : **Rofin-Sinar Laser GmbH**
**Berzeliusstrasse 87**
**D-2000 Hamburg 74 (DE)**

(72) Erfinder : **Martinen, Hinnrich, Dipl.-Phys.**
**Lindenstrasse 6**
**D-2085 Quickborn (DE)**
Erfinder : **Simonsson, Samuel Sture, Dipl.-Ing.**
**Burgstrasse 26**
**D-2090 Winsen/Bahlburg (DE)**
Erfinder : **Wirth, P., Dr, Dipl.-Phys.**
**Birkengrund 1**
**D-2090 Winsen/Luhdorf (DE)**

(74) Vertreter : **Glawe, Delfs, Moll & Partner Patentanwälte**
**Postfach 26 01 62 Liebherrstrasse 20**
**D-8000 München 26 (DE)**

**Beschreibung**

Die Erfindung bezieht sich auf ein Lasergerät für Materialbearbeitung mit einer Einrichtung zum zirkularen oder elliptischen Polarisieren des Laserstrahls, die eine Spiegelanordnung zum linearen Polarisieren des Laserstrahls unter etwa 45° zur Vertikalen umfaßt.

Bei bekannten Lasergeräten dieser Art besteht die Einrichtung zum zirkularen oder elliptischen Polarisieren des Laserstrahls einerseits aus einer Spiegelanordnung zum linearen Polarisieren des aus dem Resonator austretenden Laserstrahls und andererseits aus einer optischen Einrichtung zur Verschiebung der Phasenlage eines Teilstrahls gegenüber dem anderen Teilstrahl um 1/4 Wellenlänge. Damit sich in letzterer durch die Überlagerung eine zirkulare oder elliptische Polarisation ergeben kann, muß die Polarisationsebene des in sie eintretenden Laserstrahls unter 45° gegenüber der Vertikalen geneigt sein. Es bereitet keine Schwierigkeiten, die für die lineare Polarisation vorgesehene Spiegelanordnung in einer solchen Winkellage anzuordnen, wenn der Laserstrahl unpolarisiert aus dem Resonator austritt. Jedoch ist eine solche Spiegelanordnung aufwendig, zumal wenn der laufende Aufwand für die Wartung und den Ersatz berücksichtigt werden. Dieser Aufwand entfällt auch dann nicht, wenn ein Resonator verwendet wird, aus dem der Laserstrahl in polarisiertem Zustand austritt, weil dann die Polarisationsebene so gedreht werden muß, daß sie die gewünschte Winkellage zur Vertikalen aufweist.

Der Erfindung liegt die Aufgabe zugrunde, diesen Aufwand zu verringern.

Die erfindungsgemäße Lösung besteht darin, daß die Spiegelanordnung zum linearen Polarisieren des Laserstrahls von innerhalb des Resonators angeordneten Faltspiegeln gebildet ist und der Resonator mit einer bei 45° zur Vertikalen liegenden Reflexionsebene der Faltspiegel angeordnet ist.

Der Resonator ist die den Aufbau des Geräts aufgrund ihrer Größe und aufgrund der konstruktiven Zusammenhänge mit den Hilfskomponenten eindeutig bestimmende Hauptkomponente. Man geht bislang in der Technik bei der Konstruktion eines Lasergeräts davon aus, daß die Lage des Resonators ausschließlich nach konstruktiven Gesichtspunkten gewählt wird, weil die verhältnismäßig leichten, kleinen und anpassungsfähigen optischen Komponenten anschließend der Lage des Resonators ohne Schwierigkeiten angepaßt werden können. Daher gehörte bei der Verwendung gefalteter Resonatoren die Lage der Reflexionsebene der Faltspiegel in einer der Hauptkonstruktionsrichtungen, nämlich in der Vertikalebene oder der Horizontalebene, als unumstößliche Voraussetzung scheinbar dazu. Die Erfindung beruht demnach auf dem Grundgedanken, nicht die kleinen und anpassungfähigen optischen Elemente der Hauptkomponente des Geräts, sondern umgekehrt, die Hauptkomponente den optisch nachgeschalteten Komponenten in der Lage anzupassen, wodurch beträchtliche Ersparnisse und Vereinfachungen in Aufbau und Betrieb erzielt werden.

Unter einem Faltspiegel sind im Zusammenhang der Erfindung nicht nur solche zu verstehen, die paarweise eine Umlenkung des Strahls jeweils parallel zu sich selbst bewirken, wie dies bei gefalteten Resonatoren im engeren Sinne der Fall ist ; eingeschlossen sollen vielmehr auch beliebige andere innerhalb eines Resonators angeordnete Spiegel sein, die eine polarisierende Umlenkung des Strahls bewirken.

Sehr zweckmäßig kann es sein, wenn die Reflexionsebene des Resonators drehbar ist, um dadurch eine Anpassung der Polarisationsebene bzw. der Richtung der Hauptachse eines elliptisch polarisierten Strahlquerschnitts an gewünschte Gegebenheiten zu erreichen.

Die Winkelangabe 45° ist nicht als enge Begrenzung zu verstehen ; sie soll auch diejenigen Abweichungen von der angegebenen Winkelgröße umfassen, die im Einzelfall beispielsweise dadurch bedingt sein mögen, daß die Arbeitsrichtung des Laserstrahls von der Vertikalrichtung abweicht.

Die Erfindung wird im folgenden näher unter Bezugnahme auf die Zeichnung erläutert, die ein Beispiel der erfindungsgemäßen Gerätanordnung schematisch veranschaulicht. Darin zeigen :

Figur 1   eine perspektivische Gesamtansicht,

Figur 2   die schematische Seitenansicht eines gefalteten Resonators und

Figur 3   die Seitenansicht eines anderen, im Zusammenhang der Erfindung verwendbaren Lasertyps mit drehbarer Polarisationsebene.

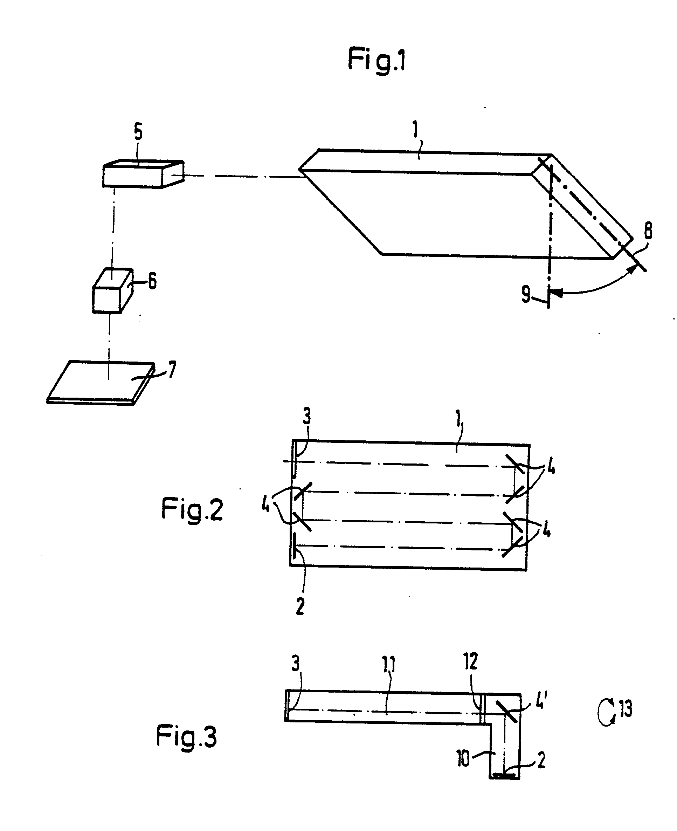

In Figur 1 wird die Verwendung eines Resonators vorausgesetzt, der — vereinfacht als Block dargestellt — einen undurchlässigen Resonatorspiegel 2 und einen durchlässigen Resonatorspiegel 3 sowie Faltspiegel 4 enthält. Der strichpunktiert angedeutete Laserstrahl gelangt aus dem Resonator 1 in die Einrichtung 5 zum zirkularen oder elliptischen Polarisieren des Laserstrahls und von dieser durch die Linsenoptik 6 zum Werkstück 7.

Der Resonator 1 ist mit seiner Reflexionsebene 8 unter 45° gegenüber der Vertikalrichtung 9 geneigt. Der Laserstrahl hat daher beim Einfall in die Einrichtung 5 bereits diejenige Lage der Polarisationsebene, die im Stand der Technik erst durch eine besondere Spiegelanordnung herbeigeführt werden muß.

Wenn statt des in den Figuren 1 und 2 angedeuteten gefalteten Resonators ein linearer Resonator verwendet werden soll, so kann dieser gemäß Figur 3 mit einem Umlenkspiegel 4' versehen werden, der im Sinne des Anspruchs ebenfalls als « die Faltspiegel » anzusprechen ist. Er dient zur Polarisation des Laserstrahl im Resonator und ist Teil eines kurzen Endstücks 10 des Resonators, das mit dem Hauptteil 11 des Resonators bei 12 über eine Drehverbindung derart verbunden ist, daß es um die Längsachse des Hauptteils 11 des Resonators gedreht werden kann, wie dies durch Pfeil 13 angedeutet ist. Dadurch läßt sich die Polarisationsebene des aus dem Resonator austretenden Strahls und damit auch die Art der Polarisation des Laserstrahls einstellen.

## Patentansprüche

1. Lasergerät für Materialbearbeitung mit einer Einrichtung zum zirkularen oder elliptischen Polarisieren des Laserstrahls, die eine Spiegelanordnung zum linearen Polarisieren des Laserstrahls unter etwa 45° zur Vertikalen umfaßt, dadurch gekennzeichnet, daß die Spiegelanordnung zum linearen Polarisieren des Laserstrahls von innerhalb des Resonators (1) angeordneten Faltspiegeln (4) gebildet ist und der Resonator (1) mit einer bei 45° zur Vertikalen (9) liegenden Reflexionsebene (8) der Faltspiegel (4) angeordnet ist.

2. Lasergerät nach Anspruch 1, dadurch gekennzeichnet, daß die Reflexionsebene (8) des Resonators drehbar ist.

## Claims

1. A laser device for material processing with a means for circular or elliptical polarisation of the laser beam, which comprises a mirror arrangement for linear polarisation of the laser beam at approximately 45° to the vertical, characterised in that the mirror arrangement for linear polarisation of the laser beam is formed by deflecting mirrors (4) disposed inside a resonator (1) and the resonator (1) is arranged with the reflection plane (8) of the deflecting mirrors (4) lying at 45° to the vertical (9).

2. A laser device according to Claim 1, characterised in that the reflection plane (8) of the resonator is rotatable.

## Revendications

1. Appareil laser pour le traitement de matériaux, comportant un dispositif pour la polarisation circulaire ou elliptique du faisceau laser, dispositif qui comprend un système de miroirs pour la polarisation linéaire du faisceau laser sous un angle d'environ 45° par rapport à la verticale, caractérisé en ce que le système de miroirs pour la polarisation linéaire du faisceau laser est formé par des miroirs en accordéon (4), disposés à l'intérieur de la cavité résonante (1) et la cavité résonante (1) est disposée avec un plan de réflexion (8) des miroirs en accordéon (4) qui est situé à 45° par rapport à la verticale (9).

2. Appareil laser selon la revendication 1, caractérisé en ce que le plan de réflexion (8) de la cavité résonante peut tourner.

# Fig.1

# Fig.2

# Fig.3